# EUROPEAN PATENT SPECIFICATION

(11) **EP 0 324 255 B1**
(45) Date of publication and mention of the grant of the patent: **23.06.1993**
(21) Application number: 88312090.9
(22) Date of filing: 21.12.1988
(51) Int. Cl.: C09D 5/08

(54) **Corrosion prevention material and method**
Korrosionsverhütendes Material und Verfahren
Matériau anti-corrosion et procédé

(30) Priority: 11.01.1988 US 141949
(43) Date of publication of application: 19.07.1989
(73) Proprietor: RAYCHEM CORPORATION (a Delaware corporation), Menlo Park, California 94025 (US)
(72) Inventor: Holland, Christine, San Mateo California 94403 (US); Rost, Timothy, Fremont California 94536 (US)
(74) Representative: Auckland, Jacqueline

(56) References cited:
- EP-A- 0 031 288
- EP-A- 0 046 057
- US-A- 4 741 940

## Description

This invention relates to compositions, articles and methods for preventing corrosion on the surfaces of substrates by utilising certain gel materials.

Gel materials have been used to protect substrates from corrosion and to provide environmental protection and/or insulation for electrical terminals, connectors and other substrates. The primary objective of environmental protection of such articles and substrates is usually to prevent their exposure to moisture. These gel materials have particular properties which distinguish them from greases, rubbers and elastomers and make them especially suitable for such uses. Those particular properties include a cone penetration as measured by ASTM D-217 of about 100 to about 350 (10⁻¹mm) and an ultimate elongation as measured by ASTM D-412 of at least about 100 percent. The ASTM cone penetration hardness values have been correlated to a "Voland" hardness measure in grams in EP-A-0295881, corresponding to US-A-4852646, which issued from US application of Dittmer and Dubrow, Serial No. 063,552 filed June 16th, 1987. The above cone penetration range corresponds to a "Voland" hardness of about 130 grams to about 6 grams. The disclosures of EP-A-0295881 and USSN 063522 are incorporated herein by reference.

These gel materials have been used in various articles and in various forms to apply the gel to a substrate and hold the gel on the substrate. For example, such gel materials have been used in terminal lug protection caps for the telecommunications industries as disclosed in US patents 4,600,261 and 4,634,207; in crimp connectors as disclosed in US serial No. 507,433 filed June 23, 1983; in covers for metal articles as disclosed in US patent 4,643,924 the thermo-formed articles as disclosed in US patent 4,690,831; in cable splice case end seals as disclosed in US patent 4,701,574 and in US patent No. 4,716,183; and in tape forms as disclosed in EP-A-0108518 claiming priorty from US application serial No. 507,435 filed June 16, 1983; EP-A-0194872 corresponding to US application serial No.711,119 filed March 12, 1985; EP-A-0204427 corresponding to US patent 4595635 which issued from US application serial No. 730,692 filed May 2, 1985 and US patent 4,595,635. These gel materials have also been disclosed for reducing corrosion in underwater or water splash zone applications as disclosed in EP-A-0246855, corresponding to US patent 4741940 which issued from US application serial No. 864,689 filed May 19, 1986.

Fumed silica has been used as a filler in silicone rubber for gaskets and other sealing materials in the range of about 20 percent by weight or more in order to increase the tensile strength or cohesive strength of the rubber. In addition, fumed silica has been used in liquid systems such as room temperature vulcanising (RTV) sealants, greases, and adhesives in various amounts to modify the viscosity of the liquid system for delivery on the desired substrate. These uses of fumed silica are illustrated in US patents 4,580,794; 4,563,498; 4,554,338; 4,529,741; 4,523,001; 4,514,529; 4,506,058; 4,500,659; 4,499,234; and 4,483,973; in Canadian patent 1,195,033 and in European patent application 152,179 published August 21, 1985.

It is also known that certain cations, e.g. calcium and zinc cations have corrosion inhibiting properties. These cations can be incorporated in compounds such as water soluble salts in protective coatings, the cations being released by dissolving of the salts. Alternatively, as described in EP-A-0046057 the cations can be chemically bound to particles of silica or alumina, by replacing the protons of the hydroxl groups which are formed on the surface of so-called activated aluminas or silicas with the cations. Corrosion protection is then provided by release of cations by ion exchange.

It is an object of the present invention to provide compositions, articles and methods which enable the utilization of gel materials having the properites stated above to provide improved corrosion protection for substrates.

In one aspect this invention provides a composition for contacting the surface of a substrate and protecting said substrate from corrosion comprising a gel material cured prior to contacting said surface to have a cone penetration of 100 to 350 (10⁻¹mm) and an ultimate elongation of at least 100% wherein said gel material contains from 0.05 to 5 % by weight of a particulate insoluble corrosion prevention agent, comprising a silica and/or alumina, and having a surface area of at least 100m²/g.

In another aspect, this invention provides an article comprising a flexible matrix having open interstices containing a composition for contacting the surface of a substrate and protecting said substrate from corrosion comprising a gel material cured prior to contacting said surface to have a cone penetration of 100 to 350 (10⁻¹mm) and an ultimate elongation of at least 100% wherein said gel material contains from 0.05 to 5 % by weight of a particulate insoluble corrosion prevention agent, comprising silica and/or alumina, and having a surface area of at least 100m²/g.

In another aspect this invention provides a method for preventing corrosion on the surface of a substrate comprising placing in contact with said surface of the substrate a composition comprising a gel material cured prior to contacting said surface to have a cone penetration of 100 to 350 (10⁻¹mm) and an ultimate elongation of at least 100% wherein said gel material contains from 0.05 to 5 percent by weight of a particulate insoluble corrosion prevention agent comprising silica and/or alumina, and having a surface area of at least 100m²/g.

The gel materials useful in the present invention include the polyurethane, silicone, styrene block copolymers and other polymer systems described in the patent applications and patents referred to earlier in this specification. These gels, to be useful in the present invention, must have the particular cone penetration and elongation properties specified above which provides gels with sufficient conformability for application to various shapes and irregularities in the surfaces of various substrates. It is desirable in many corrosion prevention uses that the gel also have a relatively high surface tack in order to form a good seal with the surface of the substrate to exclude moisture and other undesirable environmental elements, and should have sufficient elongation and tensile strength to withstand the forces and tension used in applying the gel material to the substrate without the gel tearing. These gel materials are typically very soft and have very low tensile strengths compared to elastomers and rubbers and have very high elongation compared to greases and many elastomers and rubbers. These gels are used to provide envirnomental protection of substrates in various forms, such as premoulded shapes, tapes or bulk cured gel in caps, connectors, etc., as disclosed in the patents and copending patent applications referenced above.

As disclosed in the above referenced applications and patents, these gel materials have been found effective in preventing corrosion of substrates by preventing moisture access to the substrate or providing environmental protection and sealing of the substrate surface from other elements as well as moisture. However, it has now been found that the effectiveness of these gel materials in preventing corrosion can be increased considerably and in some cases increased to essentially 100 percent, i.e., preventing all significant corrosion, by the addition of a particulate insoluble corrosion prevention agent, which is a silica or an alumina, in the liquid uncured gel material before it is cured to form the gel material having the above mentioned cone penetration and elongation properties. The terms "preventing" and "prevention" as used herein mean reducing and/or eliminating any or all corrosion, as the case may be in any particular use and application.

The particulate insoluble corrosion prevention agents useful in the present invention are materials having a surface area of at least 100m²/g. Generally they have a surface area of at least 150m²/g, preferably at least 200m²/g, more preferably at least 250m²/g and in some instances most preferably at least 300m²/g. The surface area of the corrosion prevention agent can be as high as 400m²/g or even higher in some applications, but in many gel materials particulate agents having surface areas in the range of 250m²/g to 350m²/g are preferred and give satisfactory enhancement of the corrosion prevention properties of the gel material.

The corrosion prevention agents useful in the present invention are materials which are insoluble in the liquid uncured gel material. If the corrosion prevention agent is soluble to any significant degree in the liquid uncured gel material, it may be unsuitable for use in the present invention. The corrosion prevention agent should also be stable in the cured gel material for the best long term effectiveness.

Particulate insoluble corrosion prevention agents useful in the present invention are silicas and aluminas which have surface areas in the ranges specified above. The silicas are preferred, particularly the fumed silicas. Particular examples of fumed silicas useful in the present invention include those commercially available under the trademarks "CAB-O-SIL" from Cabot Corporation, and "AEROSIL" from Degussa Corporation. Other commercially available silicas, as well as aluminas, known to have the above specified surface area properties are useful in the liquid uncured gel material polymer systems of the present invention and in the cured gel material.

The corrosion prevention agents useful in the present invention should have a suitable particle size to provide good uniform dispersion and distribution of the agent in the liquid uncured gel material and ultimately in the cured gel material. Generally, particle sizes of 0.05 micron or smaller, for example less than 0.025 micron, preferably less than 0.01 micron are useful in the present invention. It should be noted that the particle size may be useful as an indication of what particulate insoluble corrosion prevention agents are useful in the present invention, but any particle size is acceptable so long as the particulate agent has at least the minimum surface area specified above and the particles are compatible with and are dispersible in the liquid uncured gel material as well as the cured gel material. Fumed silicas useful in this invention, for example, typically can have a particle size in the range of 0.005 micron to 0.01 micron.

It is surprising to one skilled in the art that the particulate insoluble corrosion prevention agents described above would be useful as set forth in the description of the present invention. Such particulate materials having high surface area as specified above have not been known as corrosion prevention agents or as corrosion inhibitor materials. It is particularly surprising that these particulate materials would enhance the corrosion prevention characteristics of the gel materials of the present invention. These particulate materials having high surface area are not only highly hygroscopic but absorb almost anything from the environment. It would have been expected that these particulate materials if put in a gel material would tend to pull moisture into the gel material and thus potentially promote corrosion of the substrate on which the gel material were placed. To the contrary, we have found that incorporating such high surface area, particulate materials into the gel materials according to this invention significantly aids in reducing or preventing corrosion -- in some cases preventing any corrosion from occurring on the surface of the substrate. A conventional use of particulate materials, such as silicas, aluminas, etc., has been as fillers in rubbers, elastomers and adhesives (in the range of 20% or more by weight) for the purpose of increasing cohesive strength, hardness or tensile strength of those rubbers, elastomers or adhesives. However, there has been no indication that low levels of these particulates should be put in gel materials for any purpose, much less as a corrosion prevention agent. Another conventional use for such particulate materials has been for increasing viscosity of greases, RTV and other liquid or thixotropic materials. Again, this gives no indication that these particulate materials should be used in gel materials, particularly for corrosion prevention use. Also the use of known corrosion inhibiting cations, such as zinc or calcium, bound to alumina or silica (as described in EP-A-046057 referred to above) does not suggest the use of the particulate materials themselves as corrosion protecting materials. In EP-A-046057 the alumina or silica is acting merely as a carrier for the active corrosion inhibiting cations, and not as a corrosion inhibitor itself. Other reasons have been recognized by those skilled in the art why such high surface area, particulate materials would not be useful in gel materials which include interfering with the curing of the gel by absorbing the necessary gel material curing catalysts or accelerators or by introducing any number of materials which may be present in the high surface area particulates which would interfere with or poison the delicate curing of the gel materials to the desired cone penetration and ultimate elongation. It would have also been expected that the high surface area particulates often adversely affect the balance in the cured gel material of the various essential properties including cone penetration, ultimate elongation, tensile strength, surface tack, compression set, and other properties. Surprisingly, we have found that the inclusion of such high surface area particulates in gel materials does not significantly adversely affect such properties, but does provide the cured gel material with superior corrosion prevention characteristics.

The gel materials useful in the present invention generally have a cone penetration value from 100 to 350 (10⁻¹mm) and in many corrosion prevention uses it is preferred that the gel have a cone penetration between 150 and 350, and in some applications it is preferred that the cone penetration be between 200 and 300 (10⁻¹mm), and in other applications, particularly in the form of a tape having a flexible open cell foam matrix filled with the gel material, it is preferred that the cone penetration of the cured gel material be between 220 and 280 (10⁻¹mm). The ultimate elongation of the gel material should be at least 100 percent, and in some applications it is preferred that it be at least 200 percent, and in many applications elongation of at least 300 percent is desired when the gel is a silicone, and in other applications at least 500 or 700 percent is desired, particularly when the gel is a polyurethane.

The particulate insoluble corrosion prevention agents useful in the present invention should be present in the gel material composition in the range of at least 0.05 percent by weight based on the weight of the gel material, and may be present in the range of 0.05 to 5 percent by weight and preferably will be present in the range of 0.1 percent to 4 percent by weight and most preferably in the range of 0.5 percent to 3 percent by weight. As an ancillary matter, it has also been discovered that the effectiveness of the particulate insoluble corrosion prevention agent, such as fumed silica, can be enhanced by the presence of carbon black. For example, a gel material containing 0.5 percent by weight fumed silica and 0.5 percent by weight carbon black may be as effective for corrosion prevention as a gel material containing 1.5 percent or 2.5 percent fumed silica and no carbon black. It is to be noted that the gel material containing carbon black alone (with no high surface area particulate material present) exhibits no better corrosion prevention than the gel material per se, i.e., carbon black alone does not appear to contribute any corrosion prevention characteristic. Carbon black is sometimes added to these gel materials for UV stabilization.

In the remainder of this description reference is made to fumed silica, but it is to be understood that all comments relative to fumed silica are equally applicable to other high surface area, insoluble particulate corrosion prevention agents useful in the present invention, as disclosed herein.

The fumed silica is used in the present invention by adding the fumed silica to the uncured gel polymer liquid, mixing to disperse evenly the fumed silica throughout the liquid before curing, then effecting curing of the liquid to produce the gel materials having the cone penetration and elongation properties specified above. The curing catalyst, accelerators, temperatures and other conditions used will depend on the gel material being used as disclosed in the various patents and patent applications referred to above and as are conventionally used by one skilled in the art of making these gel materials.

It has been observed that the gel materials containing the fumed silica according to the present invention compared to comparable gel materials not containing fumed silica is that those materials containing the fumed silica may have increased hardness, increased elongation, and higher surface tack than expected with no significant change in the tensile strength of the material as would be expected from conventional uses of fumed silica.

### EXAMPLES

This invention can be illustrated by the following particular embodiments.

### Example I

In this example, the gel materials were prepared by mixing a commercially available two part addition cure polydimethylsiloxane gel which has a starting viscosity of 600 CPS before gelation (and a cone penetration of about 260 to about 275 (10⁻¹mm) when cured). Part A, which contains a vinyl terminated polydimethylsiloxane, and Part B, which contains a hydride functionalized polydimethylsiloxane were mixed together and the indicated amounts of fumed silica which is commercially available from Cabot Corporation as "CAB-O-SIL HS5" having a surface area of about 325 m²/g and a particle size of about 0.008 micron. These components were blended in a rotary mixer, then cured at 150°C to Voland hardness of about 12 grams (cone penetration of about 275 (10⁻¹mm), an elongation greater than 200% and a tensile strength in the range of about 3 psi. The gel was cured in a 0.030 inch thick open cell foam to form a tape, which can be installed easily on a substrate. The tape was installed on a 1018 mild steel substrate and immersed in artificial seawater, solution containing 5 percent by weight of the salts by ASTM D-1141, at 60°C for the times shown in the Table below. The corrosion rates shown in the Table were observed. For a comparison, identical gel material prepared and installed on the substrate in the same way without the fumed silica present produced the corrosion rates shown in the Table. Samples 7-12 were skinned on one side of the tape as described in U.S. Patent 4,595,635, leaving the other side tacky for contact with the steel surface.

**TABLE I**

| Sample No. | Fumed Silica (Wt.%) | Carbon Black (Wt.%) | Hours | Corrosion Rate (Mils Per Year) |
|---|---|---|---|---|
| 1 | 1.5% | 0% | 500 | 1.1 x 10⁻³ |
| 2 | 1.5% | 0% | 1000 | 5.6 x 10⁻⁴ |
| 3 | 1.5% | 0% | 5000 | 3.2 x 10⁻⁴ |
| 4 | 0% | 0% | 500 | 0.18 |
| 5 | 0% | 0% | 1000 | 2.5 x 10⁻² |
| 6 | 0% | 0% | 5000 | 4.7 x 10⁻³ |
| 7 | 1.5% | 0.5% | 500 | 2.1 x 10⁻² |
| 8 | 1.5% | 0.5% | 1000 | 1.7 x 10⁻² |
| 9 | 1.5% | 0.5% | 5000 | 5.0 x 10⁻⁴ |
| 10 | 0% | 0.5% | 500 | 0.20 |
| 11 | 0% | 0.5% | 1000 | 0.011 |
| 12 | 0% | 0.5% | 5000 | 7.0 x 10⁻³ |

As the above indicates, the corrosion rates level off after an initial high rate of corrosion when no fumed silica is present. Where the fumed silica is present in the gel material, that initial high rate of corrosion is prevented.

### Example II

In this example, gel tapes the same as Samples 1 and 4 in Example I were tested on 1018 mild steel mandrels following the guidelines in ASTM G1-81 in the same artificial seawater as Example I at 60°C immersed for 2000 hours. In the samples tested with the gel tape material (Sample 1) containing the fumed silica at the end of 2000 hours exposures the mandrels were bright with no apparent signs of corrosion or rust and an apparent corrosion rate of zero. By comparison, samples tested with gel tape material (Sample 4) containing no fumed silica the mandrels had the above corrosion rates indicated in Table I, which produced mandrels having a slightly rusty surface.

## Claims

1. A composition for contacting the surface of a substrate and protecting said substrate from corrosion comprising a gel material cured prior to contacting said surface to have a cone penetration of 100 to 350 (10⁻¹ mm) and an ultimate elongation of at least 100% wherein said gel material contains from 0.05 or 5 percent by weight of a particulate insoluble corrosion prevention agent comprising silica and/or alumina, and having a surface area of at least 100 m²/g.

2. A composition according to Claim 1, wherein the particulate agent has a surface area of at least 250 m²/g.

3. A composition according to Claim 1 or 2, wherein the silica is a fumed silica.

4. A composition according to any preceding Claim wherein the gel material is an organopolysiloxane.

5. An article comprising a flexible matrix having open interstices containing a composition for contacting the surface of a substrate and protecting said substrate from corrosion comprising a gel material cured prior to contacting said surface to have cone penetration of 100 to 350 (10⁻¹ mm) and an ultimate elongation of at least 100% wherein said gel material contains from 0.05 to 5 percent by weight of a particulate insoluble corrosion prevention agent, comprising silica and/or alumina, and having a surface area of at least 100 m²/g.

6. A method of preventing corrosion on the surface of a substrate comprising placing in contact with said surface of the substrate a composition comprising a gel material cured prior to contacting said surface to have a cone penetration of 100 to 350 (10⁻¹ mm) and an ultimate elongation of at least 100% wherein said gel material contains from 0.05 to 5 percent by weight of a particulate insoluble corrosion prevention agent comprising silica and/or alumina, a surface area of a least 100 m²/g.

## Patentansprüche

1. Zusammensetzung zum Kontakt mit der Oberfläche eines Substrats und zum Schutz dieses Substrats vor Korrosion, wobei die Zusammensetzung ein Gelmaterial aufweist, das vor dem Kontakt mit der Oberfläche gehärtet wird, um eine Konuspenetration von 100-350 (10⁻¹ mm) und eine Bruchdehnung von wenigstens 100 % zu haben, wobei das Gelmaterial 0,05-5 Gew.-% eines teilchenförmigen unlöslichen Korrosionsverhütungsmittels enthält, das ein Siliciumdioxid und/oder Aluminiumoxid aufweist und eine spezifische Oberfläche von wenigstens 100 m²/g hat.

2. Zusammensetzung nach Anspruch 1, wobei das teilchenförmige Mittel eine spezifische Oberfläche von wenigstens 250 m²/g hat.

3. Zusammensetzung nach Anspruch 1 oder 2, wobei das Siliciumdioxid eine pyrogene Kieselsäure ist.

4. Zusammensetzung nach einem der vorhergehenden Ansprüche, wobei das Gelmaterial ein Organopolysiloxan ist.

5. Gegenstand, der eine flexible Matrix aufweist, die offene Zwischenräume hat, die eine Zusammensetzung zum Kontakt mit der Oberfläche eines Substrats und zum Schutz dieses Substrats vor Korrosion enthalten, wobei die Zusammensetzung ein Gelmaterial aufweist, das vor dem Kontakt mit der Oberfläche gehärtet wird, um eine Konuspenetration von 100-350 (10⁻¹ mm) und eine Bruchdehnung von wenigstens 100 % zu haben, wobei das Gelmaterial 0,05-5 Gew.-% eines teilchenförmigen unlöslichen Korrosionsverhütungsmittels enthält, das ein Siliciumdioxid und/oder Aluminiumoxid aufweist und eine spezifische Oberfläche von wenigstens 100 m²/g hat.

6. Verfahren zum Verhüten von Korrosion an der Oberfläche eines Substrats, wobei das Verfahren aufweist: das Anbringen einer Zusammensetzung in Kontakt mit der Oberfläche des Substrats, wobei die Zusammensetzung ein Gelmaterial aufweist, das vor dem In-Kontakt-Bringen mit der Oberfläche gehärtet wird, um eine Konuspenetration von 100-350 (10⁻¹ mm) und eine Bruchdehnung von wenigstens 100 % zu haben, wobei das Gelmaterial 0,05-5 Gew.-% eines teilchenförmigen unlöslichen Korrosionsverhütungsmittels enthält, das ein Siliciumdioxid und/oder Aluminiumoxid aufweist und eine spezifische Oberfläche von wenigstens 100 m²/g hat.

## Revendications

1. Composition pour la mise en contact avec la surface d'un substrat et la protection dudit substrat contre la corrosion, comprenant une matière sous forme de gel durcie avant la mise en contact avec ladite surface de manière à avoir une pénétration de cône de 100 à 350 (10⁻¹ mm) et un allongement à la rupture d'au moins 100 %, ladite matière sous forme de gel contenant 0,05 à 5 % en poids d'un agent insoluble en particules à action de prévention de la corrosion comprenant de la silice et/ou de l'alumine, et ayant une surface spécifique d'au moins 100 m²/g.

2. Composition suivant la revendication 1, dans laquelle l'agent en particules possède une surface spécifique d'au moins 250 m²/g.

3. Composition suivant la revendication 1 ou 2, dans laquelle la silice est une silice ultrafine.

4. Composition suivant l'une quelconque des revendications précédentes, dans laquelle la matière sous forme de gel est un organopolysiloxane.

5. Article comprenant une matrice flexible ayant des interstices ouverts contenant une composition pour la mise en contact avec la surface d'un substrat et la protection dudit substrat contre la corrosion, comprenant une matière sous forme de gel durcie avant la mise en contact avec ladite surface de manière à avoir une pénétration de cône de 100 à 350 (10⁻¹ mm) et un allongement à la rupture d'au moins 100 %, dans lequel ladite matière sous forme de gel contient 0,05 à 5 % en poids d'un agent insoluble en particules à action de prévention de la corrosion, comprenant de la silice et/ou de l'alumine, et ayant une surface spécifique d'au moins 100 m²/g.

6. Procédé de prévention de la corrosion sur la surface d'un substrat, consistant à placer en contact avec ladite surface du substrat une composition comprenant une matière sous forme de gel durcie avant la mise en contact avec ladite surface de manière à avoir une pénétration de cône de 100 à 350 (10⁻¹ mm) et un allongement à la rupture d'au moins 100 %, dans lequel ladite matière sous forme de gel contient 0,05 à 5 % en poids d'un agent insoluble en particules à action de prévention de la corrosion comprenant de la silice et/ou de l'alumine, ayant une surface spécifique d'au moins 100 m²/g.
